# EUROPEAN PATENT SPECIFICATION

(11) **EP 1 365 396 B1**
(45) Date of publication and mention of the grant of the patent: **11.01.2006**
(21) Application number: 03013268.2
(22) Date of filing: 21.01.1998
(51) Int. Cl.: G11B 17/04, G11B 17/30

(54) **Display playback apparatus, disk changer device and disk magazine device**
Plattenwiedergabegerät, Plattenwechslervorrichtung und Plattenmagazin
Appareil pour la reproduction de disque,dispositif changeur de disque et magasin de disque

(30) Priority: 31.01.1997 JP 1955097; 31.03.1997 JP 8099097; 31.03.1997 JP 7951497
(43) Date of publication of application: 26.11.2003
(62) Divisional of application: 98100988.9
(73) Proprietor: CLARION Co., Ltd., Tokio (JP)
(72) Inventor: Sato, Nobuhiro, Bunkyo-ku, Tokyo (JP); Hayashi, Hideki, Bunkyo-ku, Tokyo (JP)
(74) Representative: Fritsche, Rainer

(56) References cited:
- EP-A- 0 284 445
- EP-A- 0 355 011
- EP-A- 0 575 665
- WO-A-95/28342
- US-A- 5 481 514

## Description

### BACKGROUND OF THE INVENTION

### 1. Field of the Invention

The present invention relates to a disk changer device which is preferable for use in a disk playback apparatus.

### 2. Description of the Related Art

Recently, a disk apparatus such as a CD (Compact Disk) player of the type wherein a magazine adapted to accommodate a plurality of disks is loaded therein and a disk selected by a user from the plural disks is automatically selected and played thereby is increasing from a standpoint of improving a sense of use by simplifying disk exchange operations of the user as far as possible. In order to reproduce plural disks sequentially at a common disk playback section for reproducing information recorded on each of the disks, the disk apparatus such as mentioned above is configured to fetch a desired disk from the loaded magazine, transport the disk to playback means, and return the disk into the magazine after completion of the reproduction.

Particularly, some of the above mentioned disk apparatuses employ a system using a magazine which accommodates plural disk holders, each of which holds therein one disk, in an arrangement where respective holders can be drawn out independently, and performing a loading operation of a disk from the inside of the magazine to the playback position and an ejecting operation of the disk from the playback position into the magazine by simply moving back and forth the holder. In the disk apparatus based on this system, the disk holder holding therein a selected disk is transported to a position nearby the disk playback section by the moving forth operation, and returned into the magazine by the moving back operation after the disk is received in a predetermined playback position. In order to eject a disk when exchanging the disk with another one, when the magazine is ejected, or the like, the empty disk holder is transported to a position nearby the disk playback section with the moving forth operation, then the disk holder is returned into the magazine with the disk held therein by the moving back operation after the disk at the playback position is recovered in the holder.

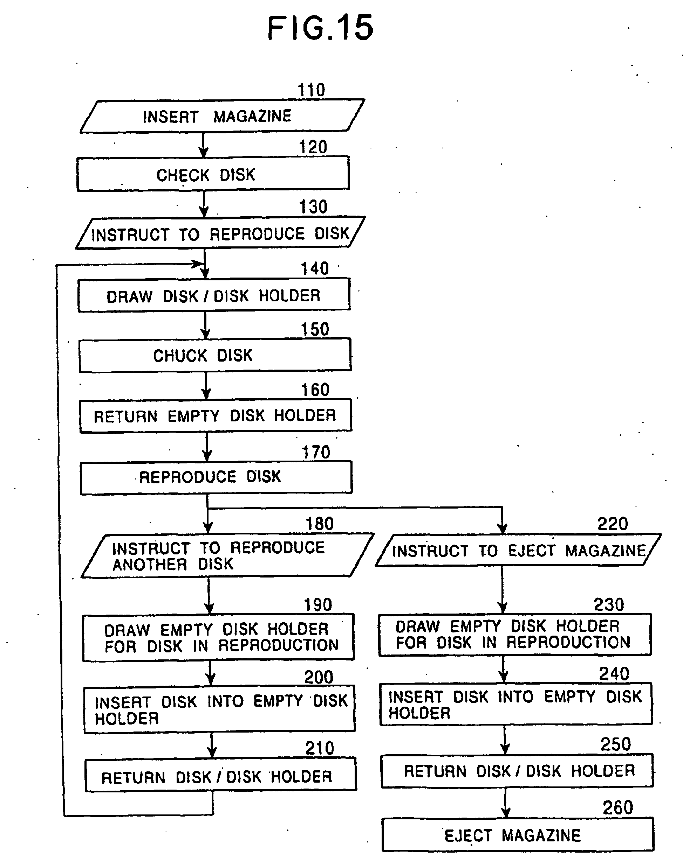

FIG. 15 is a flowchart for explaining operating procedures of the disk playback apparatus having the system such as mentioned above by way of example. As shown in FIG. 15, when a magazine is inserted (Step 110), disk checking operation for determining existence of a disk is carried out using some appropriate processes (Step 120). Subsequently, if a user instructs to reproduce the disk (Step 130), then the disk holder accommodating therein the disk corresponding to the playback instruction is drawn out from the magazine and transported to a loading position nearby a playback unit, thereby the disk held in the disk holder is transported to a predetermined chucking position on the playback unit (Step 140), then the disk is chucked at the chucking position on the playback unit (Step 150), only the empty disk holder is returned into the magazine (Step 160), and the disk is reproduced (Step 170).

If an instruction to reproduce another disk is directed by the user during Step 170 of reproducing the disk (Step 180), then the empty holder for the disk in reproduction is drawn out from the magazine (Step 190), the disk in reproduction is inserted into this empty disk (Step 200), and the disk holder accommodating therein the disk is returned into the magazine (Step 210), then control returns to Step 140 for drawing out the disk holder in which the specified another disk is accommodated.

If an instruction to eject the magazine is directed by the user during Step 170 of reproducing the disk (Step 220), then the empty holder corresponding to the disk in reproduction is drawn out from the magazine (Step 230), the disk in reproduction is inserted into this empty disk (Step 240), and the disk holder accommodating therein the disk is returned into the magazine (Step 250), then the magazine is ejected (Step 260).

In the conventional disk playback apparatus as in the foregoing, the disk holder is typically transported by using a holder drawing member which can reciprocate in the horizontal direction, and moving the holder drawing member by engaging a fingernail-shaped projection disposed on the holder drawing member with an engaging section disposed at one end of the disk holder.

The abovementioned operations of loading a disk into the playback position or ejecting a disk into the magazine in the disk playback apparatus are both performed by a device called "disk changer".

By the way, in the magazine for use in the conventional disk changer as in the foregoing, disk holders are inserted from an aperture of the magazine into a predetermined accommodation position within the magazine. At this time, if the insertion is insufficient, the holder may be accommodated in the magazine with the holder protruding outward beyond the predetermined accommodation position. When the disk holder protrudes outward beyond the predetermined accommodation position of the disk holder, it can become impossible to transport the disk holder.

Thus, in the case that the disk holder is transported by engaging a fingernail-shaped projection provided at the holder drawing member with an engaging section provided on one end of the disk holder as mentioned above, the projection of the holder drawing member is disposed to meet the position of the engaging section of the disk holder stored in a predetermined accommodation position within the magazine. Therefore, if the disk holder protrudes outward beyond the predetermined accommodation position in the magazine, the engaging section can not be engaged with the protrusion of the holder drawing member, and it can become impossible to transport the disk. Alternately, a part of the disk holder protruding outward improperly engages with the holder or any other part of the mechanism, which may results in subsequent defective performance. There exist the abovementioned disadvantages similarly when using the magazine which accommodates a disk tray of the type of placing thereon a disk as well as when using the magazine which accommodate a disk holder of the type of holding a disk as a disk holding unit.

Among various types of conventional disk changer devices, some disk changer devices in which the loading direction of the magazine and the drawing-out direction of the disk holder are same are specifically called as "end loading type disk changer device".

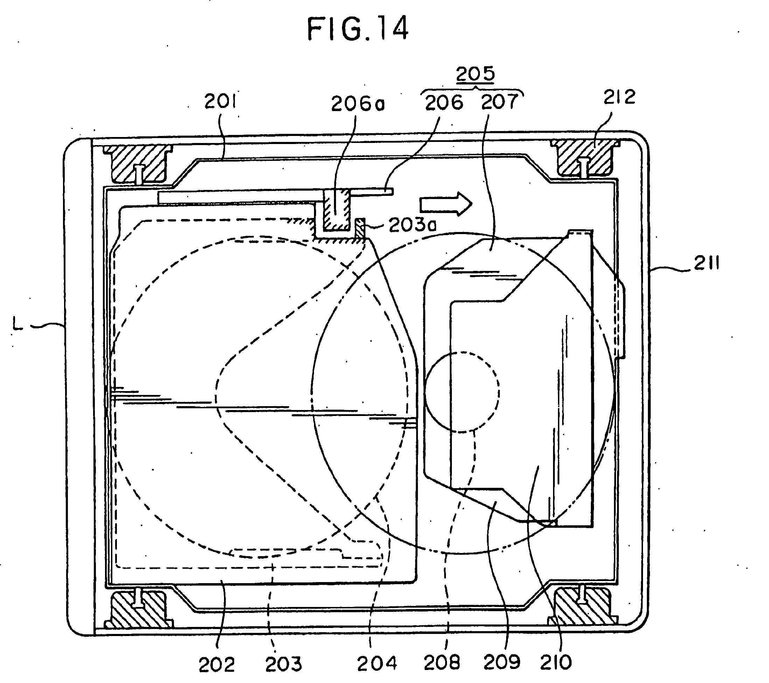

FIG. 14 is a plan view showing an end loading type on-vehicle disk changer device by way of example. As shown in FIG. 14, a magazine 202 which is inserted through a magazine insertion opening L is loaded in a magazine loading position which is disposed in the left hand part of the figure in the chassis 201 of the disk changer device. The magazine 202 accommodate plural disk holders 203 which are arranged in a vertical stack. Each disk holder 203 accommodates one disk which is inserted thereto in the direction parallel to the main surface of the disk holder 203, and slidably loaded into the magazine 202. An engaging section 203a for drawing out the disk holder 203 is disposed at one end of the disk holder 203.

A lift unit 205 is disposed in the chassis 201 of the device as shown in the right-hand part of the figure and supported to be movable in the vertical direction with respect to the chassis 201. The lift unit 205 is a combination of a holder drawing member 206 for drawing out the disk holder 203 and a playback unit 207 for reproducing a disk 204.

Among these components, the holder drawing member 206 is mounted on a chassis not shown of the lift unit 205 to be movable in the disk transporting direction, i.e. a horizontal direction in the figure, and a fingernail-shaped projection 206a which engages with the engaging section 203a is provided at one end of the holder drawing member 206.

The lift unit 205 is moved upward or downward according to a disk selection instruction in order to adjust the height of the holder drawing member 206 to be flush with the disk holder 203 accommodating therein the selected disk 204. On the other hand, the playback unit 207 comprises a drive plate 209 having a rotatable turntable 208 on which the disk 204 is mounted, a clamp arm 210 for chucking the disk 204 on the turntable 208, and the like.

The chassis 201 of the device is contained in an outer case 211, supported against the outer case 211 via a damper 212, and therefore provides a structure which enables isolation from the vehicle vibrations.

By the way, the disk changer device shown in FIG. 14 as described in the foregoing transports the disk holder 203 by engaging the engaging section 203a of the disk holder 203 with the fingernail shaped projection 206a of the holder drawing member 206 and moving the holder drawing member 206 rightward in figure. During transporting the disk holder 203 as mentioned above, in the case that the disk 204 is insufficiently inserted into the disk holder 203 and the disk 204 protrudes beyond the normal accommodation position in the disk holder 203, the disk 204 is displaced from the normal chucking position if the disk holder 203 reaches the normal loading position of the playback unit 207.

In this case, subsequent disk chucking operation may not be properly performed, which may induce a poor chucking condition. If disk reproduction operation is carried out under such bad chucking conditions as mentioned above, the quality of the disk reproduction may be degraded. Further, when recovering the disk 204 into the disk holder 203, there is a possibility that the disk 204 can not be sufficiently inserted into the disk holder 203 and, as a result, the recovery is failed.

Particularly, as shown in FIG. 14, compared with the other type disk changer devices, the end loading type disk changer device in which the loading direction of the magazine 202 and the drawing direction of the disk holder 203 is identical has a higher possibility that the disk 204 accommodated in the disk holder 203 or the disk holder 203 is popped out from the magazine 202 when the magazine 202 is forcefully inserted into the device. And at worst, it is thought that inconvenience such that the popped-out disk from the magazine 202 is dropped in the device is thought.

EP patent application 0 284 445 discloses a disk storage and retrieval device in which at least one stocker is disposed in a housing above a recording and reproducing device for storing a multitude of disk cartridges. The stocker has a plurality of horizontal shelf plates on which cartridges are received, the shelf plates being vertically disposed at equal intervals. A horizontal guide rail is mounted on a pair of vertical guide rails for vertical movement therealong. A carrier is supported on the horizontal guide rail so as to be moveable therealong in the horizontal direction for transporting a disk cartridge from the stocker to the recording and reproducing device or vice versa. A cartridge handling mechanism is attached to the carrier for transporting a cartridge between the carrier and the stocker between the carrier and the recording and reproducing device. In one embodiment, the stocker may be rotated around a vertical rotary shaft on which the shelf plates are mounted for rotation therewith. Each of the shelf plates has a plurality of storage areas for receiving a plurality of disk cartridges.

Moreover, international patent application WO 95/28342 discloses a media cartridge handling apparatus and method which include a frictional cartridge gripping mechanism in a cartridge flipping mechanism. The gripping mechanism consists of a pair of jaws whose operation is performed by a lead screw driven by a motor in conjunction with cam plates and plungers. The cartridge flipping mechanism includes a flip latch assembly which prevents rotation of flip plate after the lead screw has driven the gripper mechanism all the way rewardly, thereby creating enough torque to rotate the gripper mechanism through 180° the engage the flip latch assembly.

### SUMMARY OF THE INVENTION

A first object of the present invention is to provide a disk changer device which can certainly transport a disk holding unit to a predetermined position near playback means even if the disk holding unit is not located at a predetermined accommodation position in a magazine. A second object of the present invention is to provided a disk changer which can prevent a operational malfunction when the disk holding unit is not located at a predetermined accommodation position in the magazine.

In order to attain these objects, a disk changer device in accordance with the present invention ensures that a disk holding unit is certainly transported to a predetermined position near playback means by pressing the disk holing unit into a predetermined accommodation position,

The basic configuration of the disk changer device in accordance with the present invention comprises playback means for reproducing a disk, a magazine accommodation section which accommodates a magazine which accommodates plural disk holders, each of which holds therein one disk, in an arrangement where respective disk holding unit can be drawn out independently, and which has an aperture through which the respective plural disk holding units are drawn out, and drawing members for drawing the disk holding units from the magazine which is loaded in the magazine accommodation section to a position in the proximity of the playback means.

Moreover, when it is determined that the disk holding unit in the magazine protrudes outward beyond the predetermined accommodation position, the disk holding unit is pressed into the predetermined accommodation position in the magazine based on this determination. That is, the disk changer device according to the present invention has protrusion determination means for determining whether the disk holding unit in the magazine protrudes outward beyond the predetermined accommodation position, and pressing means for pressing the disk holding unit into the magazine when the protrusion of the disk holding unit is determined by the protrusion determination means.

In accordance with the inventive disk changer device having the configuration such as mentioned above, when the magazine is inserted into the magazine accommodation section in the state that the disk holding unit in the magazine protrudes outward beyond the predetermined accommodation position, such protrusion of the disk holding unit can be properly determined by the protrusion determination means, and thus the disk holding unit can be certainly pressed into the predetermined accommodation position in the magazine by the pressing means based on the result of the determination.

The disk changer device of the invention may have attraction means for retracting the disk holding unit to the predetermined accommodation position in the magazine when the magazine is inserted to a position back from the predetermined accommodation position in the magazine.

When the attraction means as mentioned above is provided, if the disk holding unit is pressed into the magazine to some extent by the pressing means then the disk holding unit can be moved to the predetermined accommodation position by the attraction means. Therefore, it is not necessary to press the disk holding unit into the predetermined accommodation position in the magazine by the pressing means and the dimensional accuracy required between the magazine insertion opening and the disk holding unit can be relaxed.

Further, the disk changer device in accordance with the invention may be configured so that the aperture of the magazine is typically corresponding to the end face of the disk which is held in the disk holding unit when the disk holding unit in the magazine is located at the predetermined accommodation position, and configured the edge of the magazine insertion opening controls the position of the end face of the disk held in the disk holding unit in the magazine when the magazine is inserted through this magazine insertion opening.

In accordance with the configuration as mentioned above, if the disk holding unit in the magazine is protruding, the position of the disk held in the protruding disk holding unit by the edge of the magazine insertion opening, thereby the disk holding unit accommodating this disk is pressed inward until it reaches the predetermined accommodation position. Thus, the improper accommodation of the disk holding unit can be also subsidiary corrected by a disk.

The above and other objects, features and advantages of the present invention will become apparent from the following detailed descriptions of illustrative embodiments thereof to be read referring to the accompanying drawings.

### BRIEF DESCRIPTION OF THE DRAWINGS

FIG. 1A is a plan view of a disk changer device which is one form of the present invention;
FIG. 1B is a side view of the disk changer device shown in FIG. 1A;
FIG. 2 is a plan view showing a state before a magazine is inserted into the disk changer device shown in FIG. 1A;
FIG. 3 is a plan view of the disk changer device shown in FIG 1A, especially showing a state that the magazine is inserted in the disk changer device with a disk holder protruding beyond a predetermined accommodation position;
FIG. 4 is a plan view showing a state that the magazine is further inserted from the state shown in FIG. 3
FIG. 5 is a plan view showing a state that the magazine is accommodated in a magazine accommodation section after the state shown in FIG. 4, and the disk holder is accommodated in a predetermined accommodation position in the magazine;
FIG. 6 is a plan view of the disk changer device shown in FIG 1A, especially showing a state that the magazine is inserted in the disk changer device with a disk holder holding a disk protruding beyond a predetermined accommodation position;
FIG. 7 is a plan view showing a state that the magazine is further inserted from the state shown in FIG. 6
FIG. 8 is a plan view showing a state that the magazine is accommodated in a magazine accommodation section after the state shown in FIG. 7, and the disk holder is accommodated in a predetermined accommodation position in the magazine;
FIG. 9 is a plan view of a holder transport mechanism section except the playback means among a lift unit shown in FIG. 1A;
FIG. 10 is a flowchart used for explaining operation procedures of the disk changer device in accordance with the present invention;
FIG. 11 is a flowchart used for explaining a concrete example of disk holder protrusion check operation and subsequent compulsive accommodation operation among the flowchart of FIG. 10;
FIG. 12A to FIG. 12G show schematic diagrams showing a concrete procedure of the compulsive accommodation operation shown in FIG. 11;
FIG. 13 is a view showing a circuit for checking the protrusion used in the operation procedures shown in FIG. 10 by way of example;
FIG. 14 is a plan view of a conventional disk changer device by way of example; and
FIG. 15 is a flowchart used for explaining operation procedures of a disk playback unit based on a system to which the present invention is applied.

### DESCRIPTION OF THE PREFERRED EMBODIMENTS

A concrete description will now be given to one preferred form wherein the present invention is applied to a disk playback apparatus for a 12.7 cm disk (5-inch disk) and a 8.83 cm disk (3.5 inch disk).

A description will be given to preferred forms of the disk changer device in accordance with the present invention.

### [Configuration]

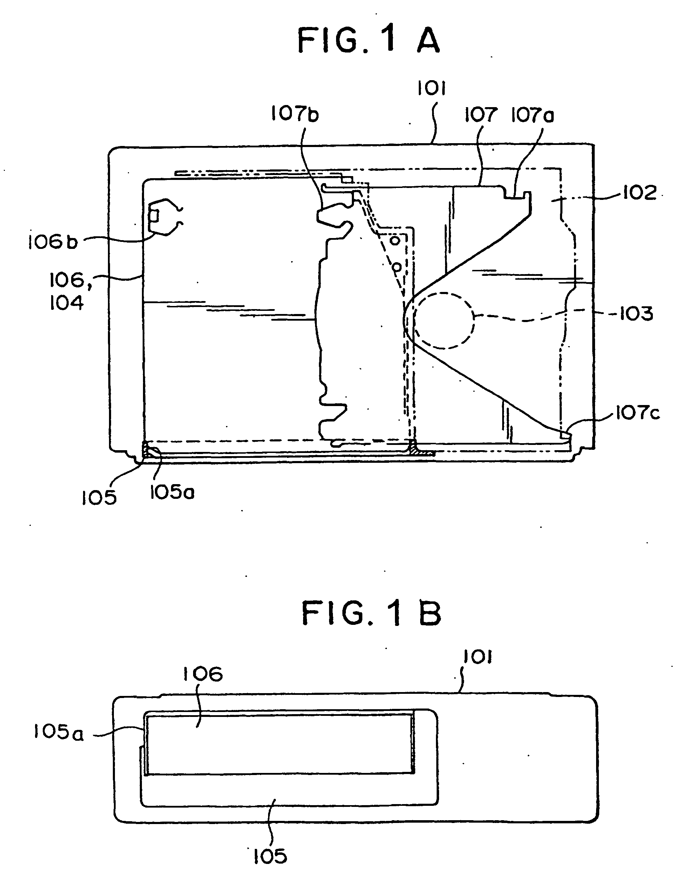

FIGS. 1A and 1B are views showing a disk changer device in accordance with the present invention: FIG. 1A is a plane view, and FIG. 1B is a side view. Referring to FIG. 1A, a lift unit 102 containing drawing means for drawing out a disk holder a disk holding unit 107 and playback means 103 for reproducing a disk is supported to be vertically movable with respect to a case 101 in the right-hand part in the case 101 of the figure. In the figure, 103 designates a turntable of the playback means on which a disk is mounted. Further, in the left-hand part in the case 101 of the figure, there is disposed a magazine accommodation section 104 into which a magazine 106 is inserted through a magazine insertion opening 105a provided at one side of the case 101, and accommodated as shown in FIG. 1A. An edge of the magazine insertion opening 105a is constructed by a insertion guide member 105 which is mounted on the side of the case 101, and the dimensions of the magazine insertion opening is generally same as the outer dimensions of the magazine 106.

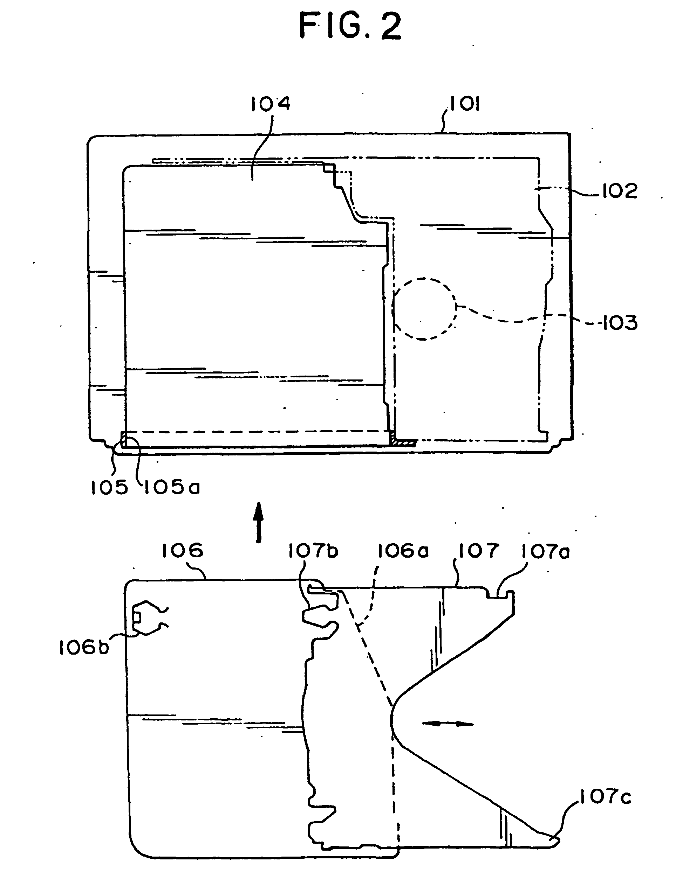

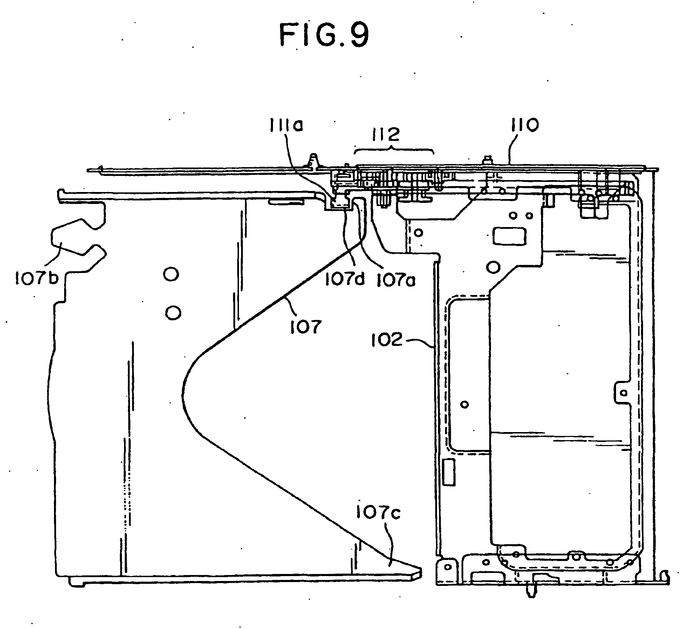

FIG. 2 is a plan view of the disk changer in the FIG. 1A showing the state before the magazine 106 is inserted therein. As shown Fig. 2, the magazine 106 accommodates said disk holder 107 therein. While only one disk holder 107 is shown, there are accommodated plural disk holders 107 in the vertical direction. These disk holders 107 are configured to be drawable rightward in the figure through an aperture 106a which is disposed at the right hand part of the figure in the magazine 106, and engaged with a projection 111a of a holder drawing member (drawing means) 111 as shown in FIG. 9 via a engaging section 107a which is disposed at the right end of one side of the magazine 106, then drawn out. In.this preferred form, the engaging section 107a of the disk holder 107 is composed of a pair of engagement faces which are horizontally opposed in the figure and a groove which is disposed therebetween, and the engagement face on the side corresponding to the moving direction of the holder drawing member 111 is adapted to be engaged with the projection 111a of the holder drawing member 111. Further, the respective disk holders 107 are fixed at a predetermined accommodation position in the magazine 106 by engaging a fixing projection 107b disposed at the left end opposed to the engaging section 107a with a spring 106b which is disposed at the inner back of the magazine 106.

More particularly, the spring 106b of the magazine 106 has a pair of opposed arms which are adapted to clamp the fixing projection 107b therebetween. In this case, each of the pair of the arms of the spring 106b has its widest portion in the middle. The arm becomes narrower at a steep angle from the widest portion to the terminal end thereof, and has its narrowest portion at the terminal end thereof, while the arm becomes narrower at a relatively gentle angle from the widest portion to the starting end. Similarly, the fixing projection 107b of the disk holder 107 which is clamped by the spring 106b has its widest portion in the middle. The projection becomes narrower at a steep angle from its widest portion to its starting end which is corresponding to the terminal end of each of the pair of the springs 106, and becomes narrower at a relatively gentle angle from the widest portion to the terminal end thereof.

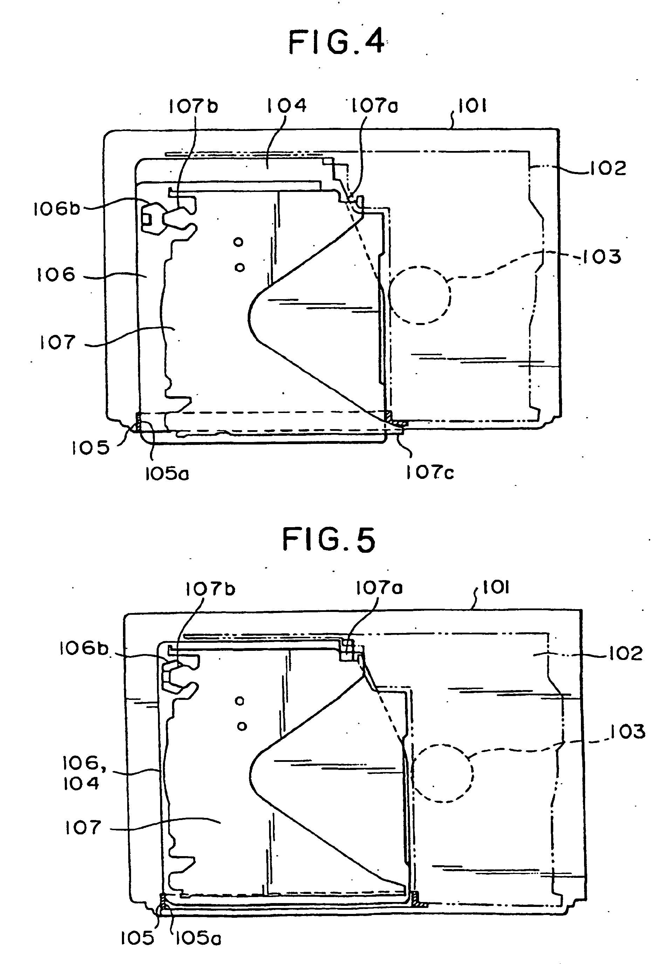

Due to the shapes of the spring 106b and the fixing projection 107b as mentioned above, when the widest portion of the fixing projection 107b of the disk holder 107 reaches the position past the narrowest portion of the terminal end of the spring 106b, the fixing projection 107b is fully inserted in the spring 106b as far as it will go in the manner in which the fixing projection 107b is pressed by the spring 106b, thereby the disk holder 107 is attracted to the predetermined accommodation position in the magazine 106 as shown in FIG. 5.

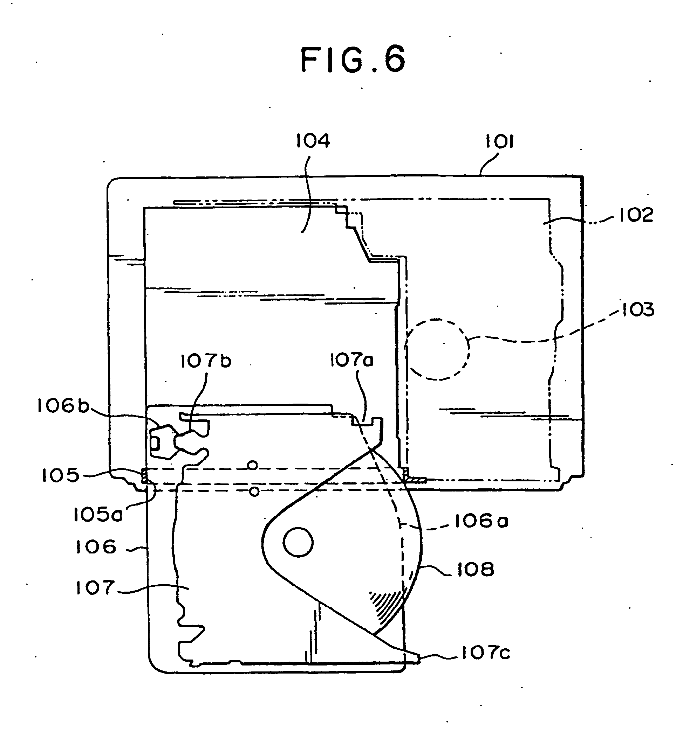

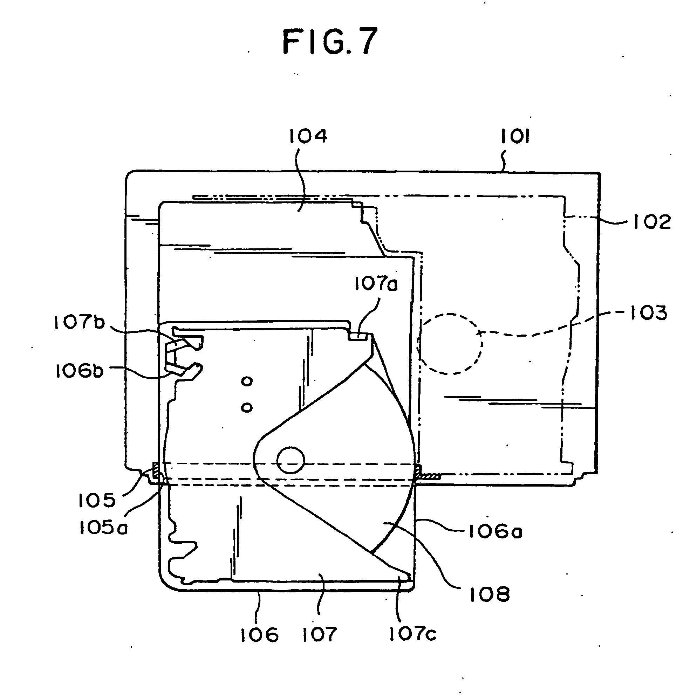

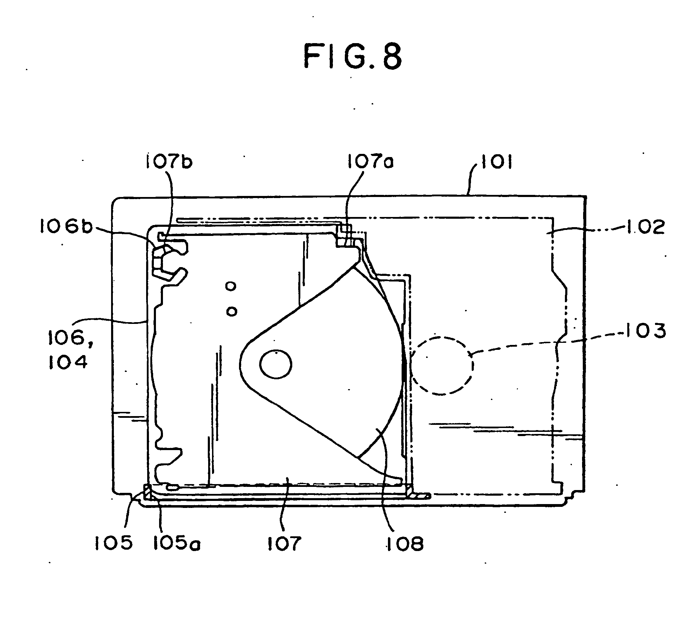

FIG. 6 to FIG. 8 show the state that the disk 108 is held in the disk holder 107. As shown in FIG. 8, the aperture 106a of the magazine 106 is configured to be generally flush with the end face of the disk 108 accommodated in the disk holder 107 which is located at the predetermined accommodation section in the magazine 106, and the position of the end face of the disk 108 held in the disk holder 107 as well as the position of the position control section 107c of the disk holder 107 in this aperture 106are controlled by the edge of the 105a when the magazine 106 is inserted through the magazine insertion opening 105a.

FIG. 9 is a plan view showing a holder transport mechanism 110 except the playback means in the lift unit 102. As shown in FIG. 9, the holder transport mechanism 110, which provided on the side wall 102a of the lift unit 102 on the side opposed to the magazine insertion opening 105a, comprises a disk holder drawing member 111 for drawing out the disk holder 107, a gear mechanism 112 for moving the disk holder drawing member 111 leftward or rightward in the figure, and the like. 111a designates a fingernail like projection which is provided at one end of the holder drawing member 111 and projects horizontally therefrom. In this case, the holder drawing member 111 and disk holder 107 are located at their initial positions, and the projection 111a of the holder drawing member 111a is configured to overlap the groove 107d of the engaging section 107a of the disk holder 107 when the disk holder 107 is properly accommodated in the predetermined accommodation section in the magazine 106 which is loaded in the disk changer.

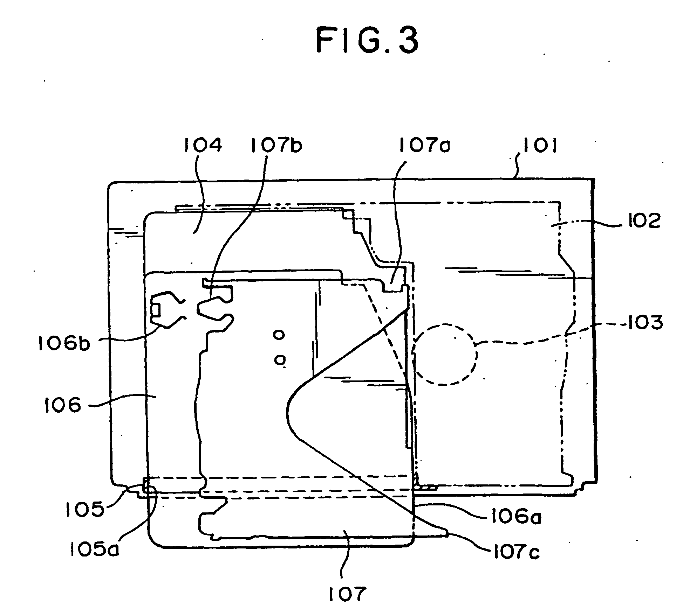

As shown in FIG. 3, when the magazine 106 is inserted through the magazine insertion opening 105a in the state that the fixing projection 107b of the disk holder 107 accommodated in the magazine 106 is located some distance from the spring 106b, and that the disk holder 107 is relatively largely protruded outward beyond the predetermined accommodation position, the magazine 106 is inserted as it is to some mid point as long as the engaging section 107a of the disk holder 107 is inserted.

As mentioned above, in such case, according to the prior art, the magazine 106 is accommodated into the magazine accommodation section 104 with the fixing projection 107 being remained in the improperly accommodated state if the disk holder 107 protrudes outward beyond the predetermined accommodation position.

### [Configuration]

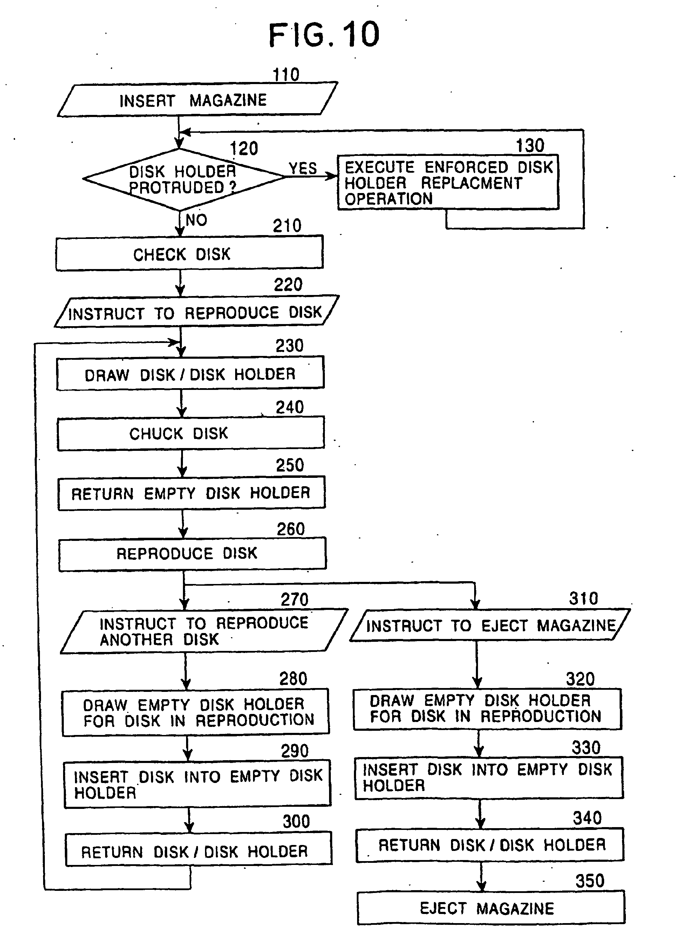

FIG. 10 is a flowchart used for explaining the operational procedure of the disk changer in accordance with the present invention. That is, the present form is configured to allow the determination of the protrusion of the disk holder 107 using the mechanism of the abovementioned form by changing a part of the control program of a control unit which is generally provided for controlling a disk changer.

As shown in FIG. 10, the basic operational flow of the disk changer in accordance with the present form is similar to that of the conventional disk changer as shown in FIG. 15. That is, operations after checking disk (Step 210) are precisely identical to those shown in FIG. 15 except that whether the disk holder is protruded is checked (Step 120) and if the disk holder protrudes, the disk holder compulsive accommodation operation is performed (Step 130) in the present form. On the other hand, if the disk holder does not protrude, that is, the disk holder is accommodated in a predetermined accommodation position in the magazine, control proceeds to Step 210 as it is and the disk check is performed.

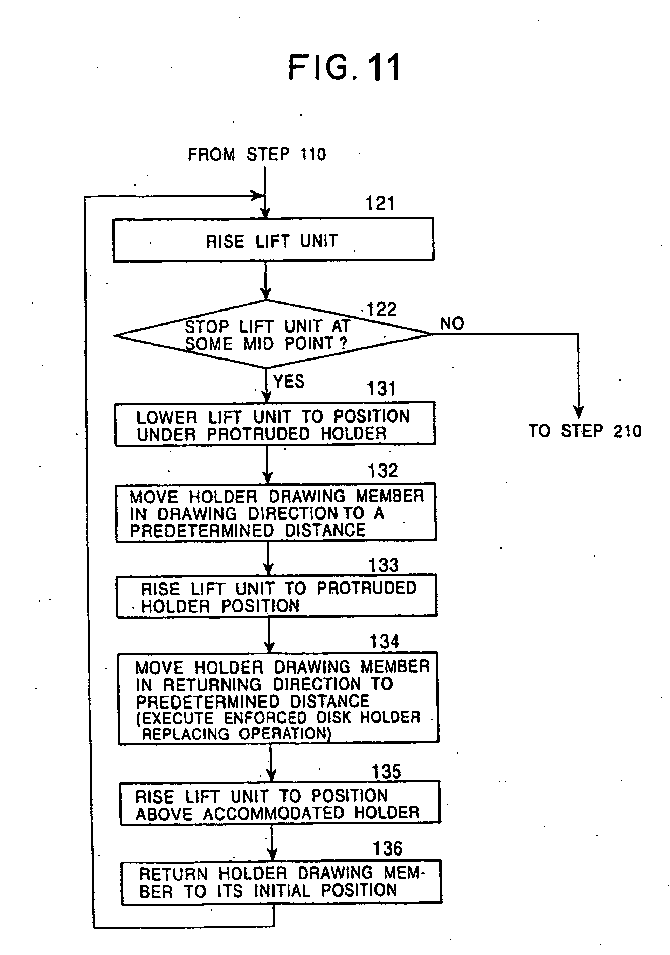

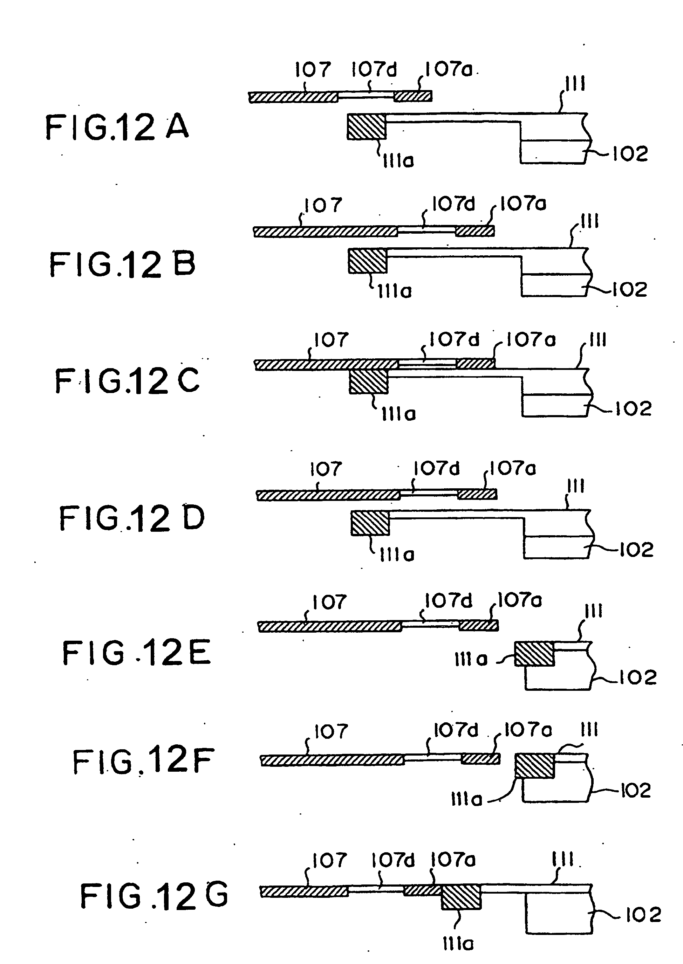

FIG. 11 is a flowchart showing a specific example of the protrusion check of the disk holder and the subsequent compulsive accommodation operation, while FIGS. 12A to 12G are schematic views showing the specific procedures of the compulsive accommodation operations by means of the disk drawing member 111. Principles of the protrusion checking operation and the subsequent compulsive accommodation operation will be described below according to the flowchart shown in FIG. 11. As shown in FIG. 12A, at the initial state before the magazine is inserted, the lift unit 102 containing the holder drawing member 111 is placed at a position lower than the lowermost disk holder 107 in the magazine 106 on standby. At this time, the holder drawing member 111 is located at the initial position which is horizontal to the lift unit 102. In this initial position, the projection 111a of the holder drawing member 111 is positioned to overlap the groove 107d of the engaging section 107a of.the disk holder 107 in the predetermined accommodation section in the magazine 106.

Then, when the magazine 106 is inserted after the abovementioned standby state (Step 110), whether each of plural disk holders 107 accommodated in the magazine 106 is protruded is checked as follows.

First, as shown in FIG. 11, the lift unit 102 containing the holder drawing member 111 is moved upward from the lowermost disk holder 107 to the uppermost disk holder 107 (Step 121), whether the lift unit 102 stops at some mid point is checked, and thereby whether any disk holder 107 protrudes is checked (Step 122).

That is, if the disk holder 107 is accommodated in the predetermined accommodation section in the magazine 106, the projection 111a of the holder drawing member 111 overlaps the groove 107d formed between a pair of the engaging surfaces of the disk holder 107 and the engaging section 107a as shown in FIG. 12A, and therefore the holder drawing member 111 can move upward without any obstacle On the contrary, when the disk holder 107 protrude outward beyond the predetermined accommodation position as shown in FIG. 12B, the overlapping length of the holder drawing member 111 and fixing projection 107 becomes longer and the projection 111a of the holder drawing member 111 overlaps the position near the center from the engaging section 107a of the disk holder 107. Accordingly, when the lift unit 102 containing the holder drawing member 111 is moved upward from the state mentioned above, the projection 111a of the holder drawing member 111 disadvantageously butts against the protruded position near the center from the engaging section 107a of the disk holder 107, and therefore the upward movement of the lift unit 104 is interfered. Accordingly, when the upward movement of the lift unit 102 in interfered, it can be determined that the disk holder 107 at that position protrudes and therefore the protruded disk holder 107 and the holder drawing member 111 is disadvantageously butts to each other.

If the upward movement of the lift unit 102 is interfered in Step 122, the lift unit 102 is slightly lowered as shown in FIG. 12D (Step 131), then the holder drawing member 111 is moved in the drawing direction for predetermined distance in the drawing distance to move the projection 111a to the position where the projection 111a does not overlaps the tip of the disk holder 107 (Step 132). After that, as shown in FIG. 12F, the lift unit 102 is moved upward for a predetermined distance and the height of the projection 111a of the holder drawing member 111 is adjusted to be flush with the disk holder 107 (Step 133), then, the disk holder 107 is forcefully pressed in the predetermined accommodation position as shown in FIG. 12G by moving the holder drawing member 111 to the initial position in the drawing direction and pressing the horizontal end face of the terminal end of the fixing projection 107 by means of the horizontal end face of the projection 111a of the holder drawing member 111 (Step 134).

After completion of the compulsive accommodation movement as mentioned above, the lift unit 102 is moved upward for a predetermined distance, the height of the projection 111a of the holder drawing member 111 is adjusted to be flush with the height between the pressed disk holder 107 and the just above disk holder 107 thereof (Step 135), and the holder drawing member 111 is returned to the initial position (Step 136), then control returns to step 111 to move the lift unit 102 upward. Subsequently, if the upward moving is interfered again in Step 122, Step 131 - Step 136 in the foregoing are repeated. If it is determined in Step 122 that the lift unit 102 does not stop at midpoint and finally reaches the uppermost disk holder 107, then the protrusion check of the disk holder 107 is finished and control transfers to the disk check step (Step 210) as shown in FIG. 10.

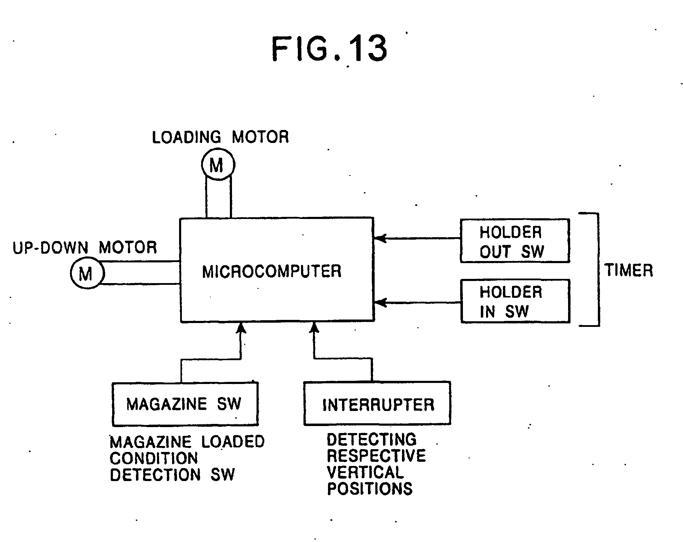

In the present form, the vertical position of the lift unit 102 can easily verified by using an existing circuit of the disk changer, for example as shown in FIG. 13. Referring to FIG. 13, a loading motor for transporting the disk/disk holder and an up/down motor for moving vertically the lift unit 102 are designed to be controlled by a micro computer.

Various detection signals are supplied to the micro computer from a timer switch for detecting the insertion/ejection of the disk holder, a magazine switch for detecting the loading of the magazine, an interrupter for detecting vertical position of the lift unit 102, and the like. Among them, the interrupter is generally provided for verifying the vertical position of the lift unit 102 corresponding to each of the disk holders 107 in the disk changer. Accordingly, when the transit time at any interrupter position exceeds the normal transit time, it can be determined that the upward movement of the lift unit 102 is interfered.

### [Operation and Effects]

In accordance with the present form having the configuration as in the foregoing, such operation as mentioned below is provided. When the magazine 106 is inserted into the disk changer, whether any disk holder 107 in the magazine 106 protrudes or not is determined easily and certainly by the vertical movement of the holder drawing member 111 which follows the vertical movement of the lift unit 102. If it is determined that the disk holder 107 protrudes, the protruded disk holder 107 is certainly pressed into the predetermined accommodation position in the magazine 106 by the combination of the vertical movement of the holder drawing member 111 which follows the vertical movement of the lift unit 102 and the horizontal movement of the holder drawing member 111.

Therefore, in accordance with the present form, if the disk holder 107 in the magazine 106 is not located at the predetermined accommodation position, the disk holder 107 is allowed to be properly accommodated in the predetermined accommodation position by the holder drawing member 111 after the magazine 106 is inserted in the disk changer. Therefore, good transporting operation of the disk holder 107 is ensured as well as in the abovementioned first form, and the disk holder 107 can be certainly transported to the predetermined position near the playback means.

Especially, in the present form, the holder drawing member 111 for drawing out the disk holder 107 is used as it is for the pressing means for forcefully pressing the disk holder 107 and the protrusion determination means for determining the protrusion of the disk holder 107, accordingly, the alignment of the holder drawing member 111 with disk holder 107 is easy, the operational reliability is good. What is more, the number of components is reduced compared with the case when a dedicated pressing means or dedicated protrusion determination means is provided, and therefore the configuration thereof can be simplified.

### Other forms

The present invention is not limited to the respective abovementioned forms, and other various modifications within the scope of the present claims can be implemented. First, the specific configuration, the positional relationship, and the like of the magazine, the disk holder, the drawing means, the playback means, the lifting means for vertically moving them, and the like can be optionally changed. For example, in the foregoing, descriptions are given to the case using a magazine in which disk holders of the type of holding one disk at each, however, the present invention is similarly applicable to the case using a magazine accommodating a disk tray as a disk holding unit on which a disk is placed.

In addition, a specially formed spring 106b and fixing projection 107b are used as the means for attracting a disk holding unit in the abovementioned form, however, specific configuration of the attracting means of the disk holding unit may be optionally changed. Further, a configuration not provided with the attracting means of the disk holding unit is also allowable. When the attracting means of the disk holding unit is not provided as mentioned above, a high degree of dimensional accuracy is required between the magazine insertion opening and the disk holding unit. In such a case, however, the dimensional accuracy between the magazine insertion opening and the disk holding unit can be reduced by giving a resilient construction to the edge of the magazine insertion opening to allow the edge to protrude on the magazine side.

On the other hand, the operational procedures of the abovementioned form described by way of example, and these operational procedures are allowed to be optionally changed. For example, instead of determining the protrusion of the disk holding unit by moving the holder drawing member 111 upward, it may be determined by moving the holder drawing member 111 downward. Specific configuration of the mechanisms can be changed optionally, and, for example, various means other than the drawing member such as the holder drawing member 111 can be used as a protrusion determination means. Still further, the determination of the protrusion of the disk holding unit is not limited to some mechanical detection method, but the determination can be freely carried out by various existing position detection methods such as an optical detection method, an electromagnetic method, and the like in combination or in single. In addition, as a pressing means for pressing a disk holding unit in a predetermined accommodation position, various means other than the drawing member such as a holder drawing member 111 can be used. Thus an appropriate operating procedure can be set depending on the configuration of the protrusion determination means, the pressing means, or the like as mentioned above.

Further, as a modification of the form, it may be configured, for example, to make a determination of the protrusion of the disk holding units regularly or as necessary other than when inserting the magazine, and if the protrusion is determined, the disk holding unit is similarly pressed into the predetermined accommodation position. Such configuration is the most suitable for the disc changer installed in a vehicle which is susceptible to vibrations. That is, undesirable external forces such as vibrations or the like may cause the protrusion of the disk holding unit if the disk holding unit is properly accommodated in the accommodation position when the magazine is inserted. The disk holding unit can be returned to the predetermined accommodation position by appropriately determining the protrusion of the disk holding unit when the disk holding unit is subjected to such vibrations or the like, and thereby the subsequent improper operation can be surely prevented.

The present invention is applicable to various disk apparatuses such as a CD-player, an LD-player, and an MD-player as long as the disk changer thereof is the type of inserting a magazine accommodating therein plural disk holding units, and remarkable effects as described regarding the various forms in the foregoing may be provided in any case.

As described above, in accordance with the present invention, when any disk holding unit in the magazine protrudes outward beyond the predetermined accommodation position, the improperly accommodated state can be corrected by determining the protrusion and operating the pressing means or by using the magazine insertion opening and mechanically pressing the disk holding unit into the predetermined accommodation position, and therefore a disk changer in which the disk holding units can be certainly transported to the predetermined position near the playback means. Further, in accordance with the present invention, a disk changer may be provided in which the occurrence of an improper operation can be prevented when any disk holder is not located in the predetermined position in the magazine by determining the protrusion of the disk holding unit and performing a motion control for stopping transferring to the playback operation.

## Claims

1. A disk changer device, comprising: playback means (103) for reproducing a disk (108), a magazine accommodation section (104) for accommodating a magazine (106) which accommodates plural disk holders (107), each of which holds therein one disk (108), in an arrangement where respective disk holding units (107) can be drawn out independently, and which has an aperture (106a) through which the respective plural disk holding units (107) are drawn out, and a drawing member (111) for drawing a disk holding unit (107) from the magazine (106) loaded in the magazine accommodation section (104) to a position in the proximity of said playback means (103); further comprising:
protrusion determination means for determining the magazine (106) inserted in said magazine accommodation section (104) whether the disk holding unit (107) in the magazine (106) protrudes outward beyond said predetermined accommodation position; and
pressing means (111) for pressing the disk holding unit (107) into the magazine (106) when said protrusion determination means determines that the disk holding unit (107) protrudes.

2. The disk changer device according to claim 1, wherein said magazine (106) comprises attraction means (106b) for retracting the disk holding unit (107) to said predetermined accommodation position in the magazine (106) when the magazine (106) is inserted to a position back from said predetermined accommodation position in the magazine (106).

3. The disk changer device in accordance with claim 2, wherein said aperture (106a) to the magazine (106) is configured to be generally corresponding of the end face of the disk (108) which is held in the disk holding unit (107) when the disk holding unit (107) in the magazine (106) is located at the predetermined accommodation position, and
wherein said edge of the magazine insertion opening (105a) is configured to control the position of the end face of the disk (108) held in the disk holding unit (107) in the magazine (106) when the magazine (106) is inserted through this magazine insertion opening (105a).

## Patentansprüche

1. Diskwechslervorrichtung, enthaltend: Wiedergabemittel (103) zum Wiedergeben einer Disk (108), ein Magazinaufnehmabschnitt (104) zum Aufnehmen eines Magazins (106), welches mehrere Diskträger (107), von denen jeder eine darin angeordnete Disk (108) trägt, in einer Anordnung Platz bietet, aus der entsprechende Diskträgereinheiten (107) einzeln herausgezogen werden können, und welches eine Öffnung (106a) aufweist; durch die die entsprechenden Diskträgereinheiten (107) herausgezogen werden, und ein Ausziehelement (111) zum Herausziehen einer Diskträgereinheit (107) aus dem in dem Magazinaufnehmabschnitt (104) eingesetzten Magazin (106), in eine Position in der Nähe der Wiedergabemittel (103), weiterhin enthaltend:
Vorspringbestimmungsmittel, um an dem in den Magazinaufnehmabschnitt (104) eingeführten Magazin (106) festzustellen, ob die Diskträgereinheit (107) in dem Magazin (106) über die vorbestimmte Aufnahmeposition hervorsteht, und
Eindrückmittel (111) zum Einschieben der Diskträgereinheit (107) in das Magazin (106), wenn das Vorspringbestimmungsmittel bestimmt, dass die Diskträgereinheit (107) hervorsteht.

2. Diskwechslervorrichtung nach Anspruch 1, bei der das Magazin (106) Rückziehmittel (106b) zum Zurückziehen der Diskträgereinheit (107) zu der vorbestimmten Aufnahmeposition in dem Magazin (106) enthält, wenn das Magazin (106) in eine Position zurück aus der vorbestimmten Aufnahmeposition in dem Magazin (106) eingeführt wird.

3. Diskwechslervorrichtung nach Anspruch 2, bei der die Öffnung (106a) an dem Magazin (106) so ausgestaltet ist, dass sie im wesentlichen der Endfläche der Disk (108) entspricht, die in der Diskträgereinheit (107) aufgenommen ist, wenn die Diskträgereinheit (107) in dem Magazin (106) in der vorbestimmten Aufnahmeposition angeordnet ist, und
bei der die Kante der Magazineinführöffnung (105a) so ausgestaltet ist, dass sie die Position der Endfläche der Disk (108), welche in der Diskträgereinheit (107) in dem Magazin (106) gehalten ist, steuert, wenn das Magazin (106) durch diese Magazineinführöffnung (105a) eingeführt wird.

## Revendications

1. Dispositif de changeur de disque, comprenant : un moyen de lecture (103) destiné à reproduire un disque (108), une section de réception de magasin (104) destinée à recevoir un magasin (106) qui reçoit plusieurs supports de disques (107), dont chacun contient un disque (108), selon un agencement où les unités de support de disques respectives (107) peuvent être retirées indépendamment, et qui comporte une ouverture (106a) par laquelle la pluralité d'unités de support de disques respectives (107) sont retirées et un élément d'entraînement (111) destiné à entraîner une unité de support de disque (107) depuis le magasin (106) chargé dans la section de réception de magasin (104) vers une position à proximité dudit moyen de lecture (103), comprenant en outre :
un moyen de détermination de dépassement destiné à déterminer, pour le magasin (106) inséré dans ladite section de réception de magasin (104), si l'unité de support de disque (107) dans le magasin (106) dépasse vers l'extérieur au-delà de ladite position de réception prédéterminée, et
un moyen de poussée (111) destiné à pousser l'unité de support de disque (107) dans le magasin (106) lorsque ledit moyen de détermination de dépassement détermine que l'unité de support de disque (107) dépasse.

2. Dispositif de changeur de disque selon la revendication 1, dans lequel ledit magasin (106) comprend un moyen de tirage (106b) destiné à ramener l'unité de support de disque (107) à ladite position de réception prédéterminée dans le magasin (106) lorsque le magasin (106) est inséré à une position en arrière de ladite position de réception prédéterminée dans le magasin (106).

3. Dispositif de changeur de disque selon la revendication 2, dans lequel ladite ouverture (106a) vers le magasin (106) est configurée pour être globalement en correspondance avec la face d'extrémité du disque (108) qui est contenu dans l'unité de support de disque (107) lorsque l'unité de support de disque (107) dans le magasin (106) est située à la position de réception prédéterminée, et
dans lequel ledit bord de l'ouverture d'insertion de magasin (105a) est configuré pour commander la position de la face d'extrémité de disque (108) contenu dans l'unité de support de disque (107) dans le magasin (106) lorsque le magasin (106) est inséré par cette ouverture d'insertion de magasin (105a).
